# EUROPÄISCHE PATENTSCHRIFT

(11) **EP 4 123 063 B1**
(45) Veröffentlichungstag und Bekanntmachung des Hinweises auf die Patenterteilung: **22.05.2024**
(21) Anmeldenummer: 21186995.3
(22) Anmeldetag: 21.07.2021
(51) Int. Cl.: D01D 5/08, D01D 4/02, D04H 1/56, B29C 48/05, B29C 48/345, D01D 5/098, D04H 3/16

(54) **DÜSENKOPF ZUR ERZEUGUNG VON FILAMENTEN**
NOZZLE HEAD FOR PRODUCING FILAMENTS
TÊTE DE BUSE DESTINÉE À LA GÉNÉRATION DE FILAMENTS

(43) Veröffentlichungstag der Anmeldung: 25.01.2023
(73) Patentinhaber: Reifenhäuser GmbH & Co. KG Maschinenfabrik, 53844 Troisdorf (DE)
(72) Erfinder: GEUS, Hans-Georg, 53859 Niederkassel (DE); HERMES, Raphael, 53859 Niederkassel (DE); JANSEN, Markus, 40789 Monheim am Rhein (DE); TERLAU, Norbert, 51427 Bergisch Gladbach (DE); WÜSCHT, Markus, 53359 Rheinbach (DE)
(74) Vertreter: Andrejewski - Honke Patent- und Rechtsanwälte Partnerschaft mbB

(56) Entgegenhaltungen:
- CN-A- 111 534 866
- US-A1- 2002 034 909
- US-A1- 2017 000 695

## Beschreibung

Die Erfindung betrifft einen Düsenkopf zur Erzeugung von Filamenten, insbesondere aus einer Polymerschmelze aus thermoplastischem Kunststoff, wobei der Düsenkopf als Meltblown-Blaskopf ausgebildet ist und eine Vielzahl von Düsenöffnungen aufweist. Weiterhin betrifft die Erfindung eine Vorrichtung zur Herstellung von Meltblown-Vliesstoffen und ein Verfahren zur Herstellung eines Meltblown-Vliesstoffes mit einer solchen Vorrichtung bzw. mit einem solchen Düsenkopf. Bei der Erzeugung von Filamenten mit einem Meltblown-Blaskopf wird die aus Düsenöffnungen bzw. Polymeraustrittsöffnungen austretende Polymerschmelze üblicherweise mit einem temperierten Blasluftstrom beaufschlagt. Die Polymerschmelze bzw. die schmelzflüssigen Kunststofffilamente werden gleichsam in einen schnellen Blasluftstrom extrudiert.

Düsenköpfe bzw. Meltblown-Blasköpfe der eingangs genannten Art sind aus der Praxis in unterschiedlichen Ausführungsformen grundsätzlich bekannt.

Relevante Informationen finden sich beispielsweise in den Dokumenten US 2002/034909 und US 2017/000695.

Beim herkömmlichen Meltblown-Verfahren wird der Vorhang der extrudierten Kunststofffilamente von der Seite bzw. von gegenüberliegenden Seiten mit einem flächigen Blasluftstrom bzw. mit flächigen Blasluftströmen beaufschlagt. Die entsprechenden Düsenköpfe mit einer Vielzahl von in einer einzigen Reihe angeordneten Polymeraustrittsöffnungen und zwei parallel dazu verlaufenden und in Richtung der Reihe der Polymeraustrittsöffnungen geneigten Luftzuströmspalten werden auch als Single-Row-Düsenköpfe bezeichnet. Diese Single-Row-Düsenköpfe haben sich grundsätzlich bewährt. Sie sind aber in der Regel nicht für große Polymerdurchsätze geeignet. Weiterhin sind Multi-Row-Düsenköpfe bekannt, bei denen mehrere Reihen von Polymeraustrittsöffnungen vorgesehen sind. In einer Ausgestaltung dieser Multi-Row-Düsenköpfe wird jede einzelne Polymeraustrittsöffnung bzw. jedes einzelne extrudierte Kunststofffilament mit einem separaten Blasluftstrom aus einer koaxial zu der Polymeraustrittsöffnung angeordneten und der Polymeraustrittsöffnung somit direkt zugeordneten Blasluftaustrittsöffnung beaufschlagt, sodass jedes einzelne Filament mit einem das Filament mantelförmig umgebenden Blasluftstrom beaufschlagt wird. Diese Düsenköpfe sind auch als Biax-Düsenköpfe der Biax-Fiberfilm-Corporation, USA bekannt und haben sich grundsätzlich bewährt. Multi-Row-Düsenköpfe bzw. Biax-Düsenköpfe sind vor allem für große Polymerdurchsätze vorgesehen.

Es hat sich allerdings gezeigt, dass die bekannten Düsenköpfe bzw. Meltblown-Blasköpfe nicht für alle Meltblown-Verfahren optimal geeignet sind. Von den Düsenköpfen strömt üblicherweise ein Filament-Luft-Strom, der die erzeugten Filamente und die Blasluft umfasst, in Richtung eines unterhalb des Düsenkopfes angeordneten Ablagebandes. Mit den bekannten Düsenköpfen bzw. Meltblown-Blasköpfen ist es in der Regel nicht möglich, den austretenden Filament-Luft-Strom hinsichtlich seiner Beschaffenheit und insbesondere seiner Geometrie gezielt zu beeinflussen. Dies gilt insbesondere für einzelne Bereiche des Filament-Luft-Stromes, etwa für die Randbereiche. Die aus der Praxis bekannten Düsenköpfe bzw. Meltblown-Blasköpfe lassen eine Beeinflussung des Filament-Luft-Stromes in der Regel lediglich über die Einflussgrößen Polymerdurchsatz, Blasluftdurchsatz und Anströmwinkel der Blasluft in Bezug auf die Filamente zu. Dadurch kann Störeinflüssen, die der Filament-Luft-Strom auf dem Strömungsweg von dem Düsenkopf zu dem Ablageband erfährt, nicht in ausreichendem Maße entgegengewirkt werden. Beispielsweise kann es in Randbereichen des Filament-Luft-Stromes zu Unregelmäßigkeiten wie Verwirbelungen kommen. Darüber hinaus können bei einer in Bezug auf das Ablageband schrägen bzw. gewinkelten Anordnung des Düsenkopfes bzw. des Meltblown-Blaskopfes Gravitationseffekte hinzukommen, die die Strömung des Filament-Luft-Stromes beeinflussen und ebenfalls zu Verwirbelungen führen können.

Fernerhin ist es bei einigen Meltblown-Verfahren vorgesehen, mehrere Filament-Luft-Ströme und/oder Kurzfaser- bzw. Partikelströme zwischen den entsprechenden Düsenköpfen und dem Ablageband zusammenzuführen und als Filament-Gemisch bzw. Filament-Kurzfaser-Gemisch abzulegen. Bei der Zusammenführung der Ströme sollen Verwirbelungen möglichst vermieden werden. Dazu ist eine gezielte Beeinflussung der Beschaffenheit bzw. der Geometrie der Filament-Luft-Ströme erforderlich. Es hat sich gezeigt, dass mit den bekannten Düsenköpfen bzw. Meltblown-Blasköpfen derartige gezielte Beeinflussungen der Beschaffenheit bzw. der Geometrie der Filament-Luft-Ströme nicht bzw. nicht in ausreichendem Maße möglich sind. Störeinflüsse bzw. Störfaktoren in Bezug auf die Filament-Luft-Ströme lassen sich dann nicht gezielt vermeiden bzw. korrigieren.

Der Erfindung liegt demgegenüber das technische Problem zugrunde, einen Düsenkopf der eingangs genannten Art anzugeben, mit dem die vorstehend beschriebenen Nachteile effektiv und funktionssicher vermieden werden können und der insbesondere eine gezielte Beeinflussung des erzeugten Filament-Luft-Stromes erlaubt, um Störeinflüssen, beispielsweise Verwirbelungen, auf dem Strömungsweg entgegenzuwirken und der nichtsdestoweniger einen hohen Polymerdurchsatz ermöglicht. Der Erfindung liegt darüber hinaus das technische Problem zugrunde, eine Vorrichtung zur Herstellung von Meltblown-Vliesstoffen mit zumindest einem solchen Düsenkopf und ein Verfahren zur Herstellung eines Meltblown-Vliesstoffes mit einer solchen Vorrichtung bzw. mit einem solchen Düsenkopf anzugeben.

Zur Lösung dieses technischen Problems lehrt die Erfindung einen Düsenkopf zur Erzeugung von Filamenten, insbesondere aus einer Polymerschmelze aus thermoplastischem Kunststoff, wobei der Düsenkopf als Meltblown-Blaskopf ausgebildet ist und eine Vielzahl von - vorzugsweise in zumindest zwei, bevorzugt in zumindest drei, besonders bevorzugt in zumindest vier Reihen bzw. Längsreihen angeordneten - Düsenöffnungen aufweist, wobei ein Teil der Düsenöffnungen als Polymeraustrittsöffnungen und ein Teil bzw. der andere Teil der Düsenöffnungen als Blasluftaustrittsöffnungen ausgebildet ist, wobei die Polymeraustrittsöffnungen und die Blasluftaustrittsöffnungen beabstandet zueinander in einem regelmäßigen Muster und/oder unregelmäßig angeordnet sind und wobei der Anteil der Polymeraustrittsöffnungen (4) an der Gesamtzahl der Düsenöffnungen zwischen 12 % und 45 % liegt.

Mit dem erfindungsgemäßen Düsenkopf lassen sich insbesondere Endlosfilamente bzw. Meltblown-Endlosfilamente erzeugen. Die erzeugten Endlosfilamente bzw. Meltblown-Endlosfilamente weisen vorzugsweise einen mittleren Filamentdurchmesser im Bereich von 0,1 bis 15 µm, bevorzugt zwischen 0,5 und 10 µm auf. Endlosfilamente unterscheiden sich aufgrund ihrer quasi endlosen Länge von Kurzfasern, die deutlich geringere Längen von beispielsweise 10 mm bis 60 mm aufweisen. Die erzeugten Filamente bzw. Endlosfilamente sind vorzugsweise auf Basis zumindest eines thermoplastischen Kunststoffes, bevorzugt ausgewählt aus der Gruppe "Polypropylen, Polyethylen, Polyester, insbesondere Polyethylenterephthalat, Polylactid, Polyvinylalkohol" ausgebildet. Gemäß einer alternativen Ausführungsform sind die erzeugten Filamente auf Basis von Lyocell bzw. einer Lyocell-Lösung ausgebildet. Es ist im Rahmen der Erfindung besonders bevorzugt, dass die erzeugten Filamente bzw. Endlosfilamente aus einer Polymerschmelze aus thermoplastischem Kunststoff erzeugt werden, wobei der thermoplastische Kunststoff besonders bevorzugt Polypropylen und/oder Polyethylen, ganz besonders bevorzugt Polypropylen ist.

Es ist außerdem bevorzugt, dass die Düsenöffnungen des erfindungsgemäßen Düsenkopfes in bzw. an einer Düsenplatte angeordnet sind. Vorzugsweise sind die Düsenöffnungen in zumindest zwei, bevorzugt in zumindest drei, besonders bevorzugt in zumindest vier Reihen bzw. Längsreihen an dem Düsenkopf bzw. der Düsenplatte angeordnet. Weiter bevorzugt sind die Düsenöffnungen in zumindest fünf, ganz besonders bevorzugt in zumindest sechs, beispielsweise in zumindest sieben Reihen bzw. Längsreihen an dem Düsenkopf bzw. der Düsenplatte angeordnet. Es ist möglich, dass die Düsenöffnungen in zumindest acht, insbesondere in zumindest zehn, vorzugsweise in zumindest zwölf, bevorzugt in zumindest vierzehn Reihen bzw. Längsreihen an dem Düsenkopf bzw. der Düsenplatte angeordnet sind. Mit dem Begriff Reihe bzw. Längsreihe ist im Rahmen der Erfindung eine Reihe von Düsenöffnungen gemeint, die sich in Längsrichtung des Düsenkopfes erstreckt und insoweit eine größere Erstreckung und/oder eine größere Anzahl an Düsenöffnungen aufweist, als quer, insbesondere senkrecht bzw. im Wesentlichen senkrecht zu den Längsreihen angeordnete Querreihen des Düsenkopfes, die aus mehreren nebeneinander angeordneten Längsreihen resultieren. In einer Meltblown-Anlage, bei der der Düsenkopf oberhalb eines Ablagebandes angeordnet ist, erstrecken sich die Längsreihen des Düsenkopfes vorzugsweise quer, insbesondere senkrecht bzw. im Wesentlichen senkrecht zur Maschinenrichtung bzw. zur Förderrichtung des Ablagebandes.

Erfindungsgemäß sind die Polymeraustrittsöffnungen und die Blasluftaustrittsöffnungen beabstandet zueinander in einem regelmäßigen Muster und/oder unregelmäßig angeordnet. Regelmäßiges Muster meint dabei insbesondere eine gleichmäßige, im Sinne einer Wiederholungseinheit wiederkehrende Abfolge der Verteilung der Polymeraustrittsöffnungen und der Blasluftaustrittsöffnungen. Unregelmäßige Anordnung meint dabei insbesondere eine ungleichmäßige bzw. zufällige Verteilung der Polymeraustrittsöffnungen und der Blasluftaustrittsöffnungen ohne eine solche wiederkehrende Wiederholungseinheit. Es ist im Rahmen der Erfindung auch möglich, dass in Bereichen bzw. Abschnitten des Düsenkopfes ein regelmäßiges Muster und in anderen Bereichen bzw. Abschnitten des Düsenkopfes eine unregelmäßige Anordnung der Polymeraustrittsöffnungen und der Blasluftaustrittsöffnungen vorliegt.

Eine besonders bevorzugte Ausführungsform der Erfindung ist dadurch gekennzeichnet, dass die Polymeraustrittsöffnungen derart ausgebildet sind, dass daraus lediglich die Polymerschmelze austritt. Die Polymeraustrittsöffnungen werden zweckmäßigerweise mit der Polymerschmelze gespeist. Besonders bevorzugt sind die Polymeraustrittsöffnungen derart ausgebildet, dass die Polymerschmelze daraus ohne einen koaxial zu der jeweiligen Polymeraustrittsöffnung austretenden Blasluftstrom austritt. Die als Polymeraustrittsöffnungen ausgebildeten Düsenöffnungen sind gemäß dieser bevorzugten Ausführungsform lediglich für den Austritt der Polymerschmelze vorgesehen, sodass aus der Polymeraustrittsöffnung keine Blasluft zusammen mit der Polymerschmelze austritt. Die aus den Polymeraustrittsöffnungen austretenden Filamente werden im Rahmen der Erfindung vorzugsweise lediglich mit Blasluft beaufschlagt, die aus den beabstandet zu den Polymeraustrittsöffnungen angeordneten Blasluftaustrittsöffnungen austritt. Die Polymerschmelze wird somit vorzugsweise gleichsam in einen Luftstrom mit einer Querschnittsfläche, die der flächigen Erstreckung des Düsenkopfes entspricht bzw. die durch die Anordnung der Blasluftaustrittsöffnungen bestimmt wird, extrudiert.

Die Blasluftaustrittsöffnungen sind bevorzugt jeweils nicht lediglich einer einzigen Polymeraustrittsöffnung zugeordnet. Somit werden die aus den Polymeraustrittsöffnungen austretenden Filamente auch nicht mit Blasluft aus einer koaxial zu den jeweiligen Polymeraustrittsöffnungen angeordneten Blasluftaustrittsöffnung beaufschlagt. Dieser Ausführungsform liegt die Erkenntnis zugrunde, dass durch die Trennung bzw. Entkopplung von Polymeraustrittsöffnungen und Blasluftaustrittsöffnungen und deren beabstandete Anordnung in einem regelmäßigen Muster und/oder deren unregelmäßige beabstandete Anordnung auf dem Düsenkopf eine funktionssichere Kontrolle bzw. Beeinflussung des resultierenden Filament-Luft-Stromes möglich ist.

Es ist weiterhin bevorzugt, dass die Blasluftaustrittsöffnungen derart ausgebildet sind, dass daraus lediglich die Blasluft austritt. Im Rahmen der Erfindung sind die Blasluftaustrittsöffnungen somit lediglich für den Austritt der Blasluft ohne gemeinsamen Austritt mit einer Polymerschmelze vorgesehen. Die Blasluft ist zweckmäßigerweise temperiert und es handelt sich bevorzugt um warme bzw. heiße Blasluft.

Nach einer besonders bevorzugten Ausführungsform der Erfindung sind zumindest 70 %, vorzugsweise zumindest 80 %, bevorzugt zumindest 90 %, besonders bevorzugt zumindest 95 % der Blasluftaustrittsöffnungen, ganz besonders bevorzugt allen Blasluftaustrittsöffnungen jeweils zumindest zwei Polymeraustrittsöffnungen zugeordnet. Mit der Zuordnung einer Polymeraustrittsöffnung zu einer Blasluftaustrittsöffnung ist im Rahmen der Erfindung insbesondere die direkt benachbarte Anordnung einer Blasluftaustrittsöffnung zu einer Polymeraustrittsöffnung ohne dazwischenliegende andere Düsenöffnungen gemeint. Die entsprechenden aus den Blasluftaustrittsöffnungen austretenden Blasluftströme sind somit nicht lediglich einer einzigen Polymeraustrittsöffnung zugeordnet, sondern (jeweils) zumindest zwei Polymeraustrittsöffnungen zugeordnet. Es liegt außerdem im Rahmen der Erfindung, dass zumindest 70 %, vorzugsweise zumindest 80 %, bevorzugt zumindest 90 %, besonders bevorzugt zumindest 95 % der Polymeraustrittsöffnungen, ganz besonders bevorzugt allen Polymeraustrittsöffnungen jeweils zumindest zwei Blasluftaustrittsöffnungen zugeordnet sind.

Es ist im Rahmen der Erfindung besonders bevorzugt, dass die Abstände direkt benachbarter Düsenöffnungen des Düsenkopfes in zumindest einer Düsenkopfrichtung auf dem gesamten Düsenkopf gleich bzw. im Wesentlichen gleich sind. Mit dem Abstand zweier Düsenöffnungen ist im Rahmen der Erfindung insbesondere der Mittelpunktsabstand der Düsenöffnungen gemeint. Mit direkt benachbarten Düsenöffnungen des Düsenkopfes sind im Rahmen der Erfindung insbesondere in einer Düsenkopfrichtung nebeneinander angeordnete Düsenöffnungen gemeint, zwischen denen keine weitere Düsenöffnung angeordnet ist. Die Düsenöffnungen können beispielsweise in Längsrichtung des Düsenkopfes, in Querrichtung des Düsenkopfes oder in einer Schräg- bzw. Diagonalrichtung des Düsenkopfes direkt benachbart sein. Dass die Abstände direkt benachbarter Düsenöffnungen des Düsenkopfes in einer Düsenkopfrichtung auf dem gesamten Düsenkopf gleich bzw. im Wesentlichen gleich sind, meint im Rahmen der Erfindung insbesondere, dass alle Abstände in Längsrichtung des Düsenkopfes direkt benachbarter Düsenöffnungen auf dem gesamten Düsenkopf gleich bzw. im Wesentlichen gleich sind und/oder dass alle Abstände in Querrichtung des Düsenkopfes direkt benachbarter Düsenöffnungen auf dem gesamten Düsenkopf gleich bzw. im Wesentlichen gleich sind und/oder dass alle Abstände in einer Schräg- bzw. Diagonalrichtung des Düsenkopfes direkt benachbarte Düsenöffnungen auf dem gesamten Düsenkopf gleich bzw. im Wesentlichen gleich sind. Es liegt außerdem im Rahmen der Erfindung, dass die Abstände in zumindest zwei Düsenkopfrichtungen direkt benachbarter Düsenöffnungen des Düsenkopfes auf dem gesamten Düsenkopf gleich bzw. im Wesentlichen gleich sind.

Eine besonders bevorzugte Ausführungsform der Erfindung ist dadurch gekennzeichnet, dass die Abstände direkt benachbarter Blasluftaustrittsöffnungen in zumindest einer Düsenkopfrichtung und/oder die Abstände benachbarter Polymeraustrittsöffnungen in zumindest einer Düsenkopfrichtung auf dem gesamten Düsenkopf gleich bzw. im Wesentlichen gleich sind. Mit benachbarten Polymeraustrittsöffnungen sind im Rahmen der Erfindung insbesondere zwei Polymeraustrittsöffnungen gemeint, die nicht direkt benachbart sind, zwischen denen aber keine weitere Polymeraustrittsöffnung angeordnet ist. Es versteht sich im Übrigen, dass die Blasluftaustrittsöffnungen beispielsweise in Längsrichtung des Düsenkopfes, in Querrichtung des Düsenkopfes oder in einer Schräg- bzw. Diagonalrichtung des Düsenkopfes direkt benachbart zueinander angeordnet sein können und dass die Polymeraustrittsöffnungen beispielsweise in Längsrichtung, in Querrichtung oder in Schräg- bzw. Diagonalrichtung des Düsenkopfes benachbart zueinander angeordnet sein können. Im Rahmen der Erfindung meint Längsrichtung des Düsenkopfes insbesondere die Richtung der größten Längserstreckung des Düsenkopfes, während Querrichtung insbesondere die Richtung quer, insbesondere senkrecht bzw. im Wesentlichen senkrecht zur Längsrichtung des Düsenkopfes meint. Schräg- bzw. Diagonalrichtung des Düsenkopfes meint im Rahmen der Erfindung insbesondere jede nicht der Längs- oder Querrichtung des Düsenkopfes entsprechende Richtung. In einer Meltblown-Anlage, in der der Düsenkopf oberhalb eines Ablagebandes angeordnet ist, verläuft die Längsrichtung des Düsenkopfes vorzugsweise quer, insbesondere senkrecht bzw. im Wesentlichen senkrecht zur Maschinenrichtung bzw. zur Förderrichtung des Ablagebandes.

Es liegt im Rahmen der Erfindung, dass der Anteil der Polymeraustrittsöffnungen an der Gesamtzahl der Düsenöffnungen zwischen 12 % und 45 %, bevorzugt zwischen 15 % und 40 % liegt. Gemäß einer bevorzugten Ausführungsform der Erfindung weist der Düsenkopf lediglich Polymeraustrittsöffnungen und Blasluftaustrittsöffnungen als Düsenöffnungen auf. Der Ausführungsform mit dem vorstehend beschriebenen Anteil der Polymeraustrittsöffnungen an der Gesamtzahl der Düsenöffnungen liegt die Erkenntnis zugrunde, dass die Beschaffenheit bzw. Geometrie des resultierenden Filament-Luft-Stromes mit diesem Anteil der Polymeraustrittsöffnungen sehr funktionssicher beeinflusst und/oder kontrolliert werden kann.

Eine besonders bevorzugte Ausführungsform der Erfindung ist dadurch gekennzeichnet, dass zumindest eine Reihe bzw. Längsreihe aus Düsenöffnungen vorgesehen ist, die ausschließlich Blasluftaustrittsöffnungen aufweist. Bevorzugt sind an dem Düsenkopf zumindest zwei, besonders bevorzugt zumindest drei und ganz besonders bevorzugt zumindest vier Reihen bzw. Längsreihen angeordnet, die ausschließlich Blasluftaustrittsöffnungen aufweisen. Vorzugsweise folgt auf eine Reihe bzw. Längsreihe, die ausschließlich Blasluftaustrittsöffnungen aufweist, eine Reihe bzw. Längsreihe, in der Polymeraustrittsöffnungen vorhanden sind. Zweckmäßigerweise sind an dem Düsenkopf zumindest zwei, bevorzugt zumindest drei, besonders bevorzugt zumindest vier Reihen bzw. Längsreihen angeordnet, die Polymeraustrittsöffnungen aufweisen. Die ausschließlich Blasluftaustrittsöffnungen aufweisenden Reihen bzw. Längsreihen und die Reihen bzw. Längsreihen mit Polymeraustrittsöffnungen sind besonders bevorzugt in Querrichtung des Düsenkopfes über den gesamten Düsenkopf alternierend angeordnet. Dann umfasst der Düsenkopf insbesondere eine Vielzahl von Reihen bzw. Längsreihen, die ausschließlich Blasluftaustrittsöffnungen aufweisen und eine Vielzahl von Reihen bzw. Längsreihen, die Polymeraustrittsöffnungen aufweisen. Dass in einer Reihe bzw. Längsreihe Polymeraustrittsöffnungen vorhanden sind, meint insbesondere, dass die Reihe bzw. Längsreihe zumindest eine Polymeraustrittsöffnung als Düsenöffnung aufweist. Dass zwei Reihen bzw. Längsreihen aufeinander folgen, meint im Rahmen der Erfindung insbesondere, dass diese Reihen bzw. Längsreihen in Querrichtung des Düsenkopfes direkt aufeinander folgen.

Eine empfohlene Ausführungsform der Erfindung zeichnet sich dadurch aus, dass in der zumindest einen Reihe bzw. Längsreihe, die Polymeraustrittsöffnungen aufweist, vorzugsweise in allen Reihen bzw. Längsreihen, die Polymeraustrittsöffnungen aufweisen, sowohl Polymeraustrittsöffnungen als auch Blasluftaustrittsöffnungen angeordnet sind und wobei die Polymeraustrittsöffnungen und die Blasluftaustrittsöffnungen bevorzugt alternierend und/oder unregelmäßig in der jeweiligen Reihe bzw. Längsreihe angeordnet sind. Es ist somit bevorzugt, dass der Düsenkopf Reihen bzw. Längsreihen aufweist, in denen ausschließlich Blasluftaustrittsöffnungen angeordnet sind und dass der Düsenkopf Reihen bzw. Längsreihen aufweist, in denen sowohl Polymeraustrittsöffnungen als auch Blasluftaustrittsöffnungen angeordnet sind. Es ist möglich, dass in einer solchen Reihe die Polymeraustrittsöffnungen und die Blasluftaustrittsöffnungen bereichsweise bzw. abschnittsweise alternierend und bereichsweise bzw. abschnittsweise unregelmäßig angeordnet sind.

Es liegt grundsätzlich auch im Rahmen der Erfindung, dass alle Reihen bzw. Längsreihen aus Düsenöffnungen sowohl Polymeraustrittsöffnungen als auch Blasluftaustrittsöffnungen aufweisen und dass in allen Reihen bzw. Längsreihen dann die Polymeraustrittsöffnungen und die Blasluftaustrittsöffnungen jeweils bevorzugt alternierend und/oder unregelmäßig angeordnet sind.

Gemäß einer alternativen bevorzugten Ausführungsform der Erfindung sind in der zumindest einen Reihe bzw. Längsreihe, die Polymeraustrittsöffnungen aufweist, vorzugsweise in allen Reihen bzw. Längsreihen, die Polymeraustrittsöffnungen aufweisen, ausschließlich Polymeraustrittsöffnungen angeordnet. Es ist im Rahmen dieser alternativen Ausführungsform möglich, dass auf dem Düsenkopf - insbesondere in Längsrichtung des Düsenkopfes - direkt benachbarte Polymeraustrittsöffnungen vorliegen. Im Rahmen dieser Ausführungsform ist es bevorzugt, dass Reihen bzw. Längsreihen, die ausschließlich Blasluftaustrittsöffnungen aufweisen und Reihen bzw. Längsreihen, die ausschließlich Polymeraustrittsöffnungen aufweisen, in Querrichtung des Düsenkopfes über den gesamten Düsenkopf alternierend angeordnet sind. Es liegt in diesem Zusammenhang außerdem im Rahmen der Erfindung, dass die Polymeraustrittsöffnungen der ausschließlich Polymeraustrittsöffnungen aufweisenden Reihen bzw. Längsreihen in Längsrichtung des Düsenkopfes versetzt zu den Blasluftaustrittsöffnungen der ausschließlich Blasluftaustrittsöffnungen aufweisenden Reihen bzw. Längsreihen angeordnet sind.

Es ist bevorzugt, dass die Blasluftaustrittsöffnungen einen Durchmesser zwischen 0,05 und 2 mm, vorzugsweise zwischen 0,1 und 1,5 mm, bevorzugt zwischen 0,1 und 1 mm aufweisen. Es empfiehlt sich, dass sämtliche Blasluftaustrittsöffnungen des Düsenkopfes den gleichen bzw. im Wesentlichen den gleichen Durchmesser aufweisen. Die Düsenöffnungen des Düsenkopfes sind im Rahmen der Erfindung im Übrigen rund bzw. kreisrund ausgebildet.

Es liegt im Rahmen der Erfindung, dass der Durchmesser der Polymeraustrittsöffnungen um maximal 15 %, vorzugsweise um maximal 10 % von dem Durchmesser der Blasluftaustrittsöffnungen abweicht. Es ist bevorzugt, dass der Durchmesser sämtlicher Polymeraustrittsöffnungen des Düsenkopfes gleich ist bzw. im Wesentlichen gleich ist. Im Rahmen der Erfindung kann der Durchmesser der Polymeraustrittsöffnungen vorzugsweise größer oder kleiner als der Durchmesser der Blasluftaustrittsöffnungen sein und weicht dabei um maximal 15%, vorzugsweise um maximal 10 % von dem Durchmesser der Blasluftaustrittsöffnungen ab. Gemäß einer besonders bevorzugten Ausführungsform der Erfindung weicht der Durchmesser der Polymeraustrittsöffnungen um maximal 5 % von dem Durchmesser der Blasluftaustrittsöffnungen ab. Zweckmäßigerweise weicht der Durchmesser der Polymeraustrittsöffnungen um 2 % bis 20 %, vorzugsweise um 5 % bis 15 % von dem Durchmesser der Blasluftaustrittsöffnungen ab. Gemäß einer Ausführungsform der Erfindung entspricht der Durchmesser der Polymeraustrittsöffnungen im Wesentlichen dem Durchmesser der Blasluftaustrittsöffnungen, sodass insbesondere alle Düsenöffnungen des Düsenkopfes den gleichen Durchmesser bzw. im Wesentlichen den gleichen Durchmesser aufweisen.

Eine bevorzugte Ausführungsform der Erfindung ist dadurch gekennzeichnet, dass der Düsenkopf Öffnungsfortsätze aufweist, die über eine Düsenkopfoberfläche des Düsenkopfes hinausragen und an deren der Düsenkopfoberfläche abgewandten Ende vorzugsweise die Polymeraustrittsöffnungen angeordnet sind. Dass die Öffnungsfortsätze über eine Düsenkopfoberfläche des Düsenkopfes hinausragen, meint im Rahmen der Erfindung insbesondere, dass sich die Öffnungsfortsätze über die Düsenkopfoberfläche hinaus erstrecken und dass die Polymerschmelze an dem der Düsenkopfoberfläche abgewandten Ende der Öffnungsfortsätze aus den Öffnungsfortsätzen bzw. aus den Polymeraustrittsöffnungen austritt. Die Düsenkopfoberfläche wird im Rahmen der Erfindung insbesondere von einer Düsenplatte gebildet. Es ist bevorzugt, dass die Blasluftaustrittsöffnungen in der Düsenkopfoberfläche bzw. in der Düsenplatte angeordnet sind. Es hat sich bewährt, dass der Abstand zwischen dem der Düsenkopfoberfläche abgewandten Ende der Öffnungsfortsätze und der Düsenkopfoberfläche zwischen 0,05 und 10 mal, bevorzugt zwischen 0,1 und 5 mal dem Durchmesser der Polymeraustrittsöffnungen entspricht.

Wenn der Düsenkopf gemäß bevorzugter Ausführungsform der Erfindung Öffnungsfortsätze aufweist, dann weicht zweckmäßigerweise der Außendurchmesser der Öffnungsfortsätze an deren der Düsenkopfoberfläche abgewandten Ende, an dem vorzugsweise die Polymeraustrittsöffnungen angeordnet sind, um maximal 15 %, bevorzugt um maximal 10 % von dem Durchmesser der Blasluftaustrittsöffnungen ab. Zweckmäßigerweise ist der Außendurchmesser sämtlicher Öffnungsfortsätze in diesem Bereich gleich bzw. im Wesentlichen gleich. Im Rahmen der Erfindung kann der Außendurchmesser der Öffnungsfortsätze an dem der Düsenkopfoberfläche abgewandten Ende größer oder kleiner als der Durchmesser der Blasluftaustrittsöffnungen sein. Gemäß einer bevorzugten Ausführungsform weicht der Außendurchmesser der Öffnungsfortsätze in diesem Bereich um maximal 5 % von dem Durchmesser der Blasluftaustrittsöffnungen ab. Zweckmäßigerweise weicht der Außendurchmesser der Öffnungsfortsätze an dem der Düsenkopfoberfläche abgewandten Ende zwischen 2 % und 20 %, vorzugsweise zwischen 5 % und 15 % von dem Durchmesser der Blasluftaustrittsöffnungen ab. Gemäß einer weiteren bevorzugten Ausführungsform der Erfindung entspricht der Außendurchmesser der Öffnungsfortsätze an dem der Düsenkopfoberfläche abgewandten Ende dem Durchmesser der Blasluftaustrittsöffnungen bzw. entspricht im Wesentlichen diesem Durchmesser.

Zur Lösung des technischen Problems lehrt die Erfindung weiterhin eine Vorrichtung zur Herstellung von Meltblown-Vliesstoffen, insbesondere aus einer Polymerschmelze aus thermoplastischem Kunststoff, mit zumindest einem Filamente abgebenden Düsenkopf, insbesondere einem vorstehend beschriebenen Düsenkopf, wobei unterhalb des Düsenkopfes ein kontinuierlich bewegbares Ablageband angeordnet ist, auf dem die Filamente zum Meltblown-Vliesstoff ablegbar sind, wobei der Düsenkopf als Meltblown-Blaskopf ausgebildet ist und eine Vielzahl von - vorzugsweise in zumindest zwei, bevorzugt in zumindest drei, besonders bevorzugt in zumindest vier sich quer, insbesondere senkrecht bzw. im Wesentlichen senkrecht zur Förderrichtung des Ablagebandes erstreckenden Reihen bzw. Längsreihen angeordnete - Düsenöffnungen aufweist, wobei ein Teil der Düsenöffnungen als Polymeraustrittsöffnungen und ein Teil bzw. der andere Teil der Düsenöffnungen als Blasluftaustrittsöffnungen ausgebildet ist, wobei die Polymeraustrittsöffnungen und die Blasluftaustrittsöffnungen beabstandet zueinander in einem regelmäßigen Muster und/oder unregelmäßig angeordnet sind.

Es ist bevorzugt, dass das Ablageband ein Ablagesiebband und insbesondere ein kontinuierlich bewegbares Ablagesiebband ist. Es ist weiterhin bevorzugt, dass unterhalb des Ablagebandes bzw. Ablagesiebbandes, insbesondere unterhalb eines Ablagebereiches der Filamente, eine Absaugeinrichtung, insbesondere ein Absauggebläse, angeordnet ist, mit dem Luft bzw. Prozessluft von unten durch das Ablagesiebband saugbar ist. Es liegt weiterhin im Rahmen der Erfindung, dass die Vorrichtung zumindest zwei Filamente abgebende Düsenköpfe bzw. Meltblown-Blasköpfe aufweist. In diesem Zusammenhang ist es bevorzugt, dass die beiden resultierenden Filament-Luft-Ströme auf dem Strömungsweg zwischen dem Düsenkopf und dem Ablageband bzw. Ablagesiebband in einer Kontaktzone zusammengeführt werden. Es ist außerdem bevorzugt, dass dem Filament-Luft-Strom bzw. den Filament-Luft-Strömen Kurzfasern, beispielsweise Pulp-Kurzfasern zugemischt werden und zwar insbesondere in der vorstehend beschriebenen Kontaktzone. Dazu weist die Vorrichtung vorzugsweise eine Kurzfasern bzw. Pulp-Kurzfasern abgebende Einrichtung auf. Mit dem Begriff Pulp ist im Rahmen der Erfindung insbesondere ein faseriges Material auf Basis von Zellstoff bzw. Zellulose gemeint.

Es ist möglich, dass der Düsenkopf bzw. der Meltblown-Blaskopf, insbesondere die Düsenköpfe bzw. die Meltblown-Blasköpfe schräg bzw. gewinkelt zu dem Ablagesiebband angeordnet ist/sind, sodass die resultierenden Filament-Luft-Ströme vorzugsweise schräg bzw. gewinkelt in Richtung des Ablagebandes bzw. dessen Oberfläche und/oder in Richtung eines Kurzfaser-Luft-Stromes bzw. Pulp-Kurzfaser-Luft-Stromes strömen, bevor die Ströme vorzugsweise in der Kontaktzone zusammengeführt werden und im Anschluss besonders bevorzugt als zusammengeführter Strom mit einer Strömungsrichtung senkrecht bzw. im Wesentlichen senkrecht zur Siebbandoberfläche des Ablagesiebbandes strömen.

Zur Lösung des technischen Problems lehrt die Erfindung weiterhin ein Verfahren zur Herstellung eines Meltblown-Vliesstoffes mit einer vorstehend beschriebenen Vorrichtung, wobei mit dem zumindest einen Düsenkopf Filamente, insbesondere aus einer Polymerschmelze aus thermoplastischem Kunststoff, erzeugt werden und wobei die Filamente auf einem kontinuierlich bewegbaren Ablageband zum Meltblown-Vliesstoff abgelegt werden. Es ist im Rahmen des erfindungsgemäßen Verfahrens bevorzugt, dass den Filamenten auf dem Strömungsweg zwischen dem zumindest einen Düsenkopf und dem Ablageband Kurzfasern, insbesondere Pulp-Kurzfasern, zugefügt werden, vorzugsweise in einer Kontaktzone zugefügt werden, sodass ein Filament-Kurzfaser-Gemisch auf dem Ablageband als Meltblown-Vliesstoff abgelegt wird.

Die Erfindung betrifft außerdem die Verwendung eines vorstehend beschriebenen Düsenkopfes in einem Verfahren zur Herstellung eines Vliesstoffes bzw. Meltblown-Vliesstoffes aus Filamenten bzw. Meltblown-Filamenten und Pulp-Kurzfasern.

Der Erfindung liegt die Erkenntnis zugrunde, dass mit dem erfindungsgemäßen Düsenkopf die Beschaffenheit bzw. Geometrie des erzeugten Filament-Luft-Stromes funktionssicher und gezielt beeinflusst werden kann. Durch die Entkopplung von Blasluftaustrittsöffnungen und Polymeraustrittsöffnungen, bei der eine direkte Zuordnung jeweils einer Blasluftaustrittsöffnung zu lediglich einer einzigen Polymeraustrittsöffnung vermieden wird, lässt sich die resultierende Beschaffenheit bzw. Geometrie des Filament-Luft-Stromes in ausreichendem Maße beeinflussen, um Störeinflüsse bei der Strömung des Filament-Luft-Stromes zu vermeiden bzw. diesen entgegenzuwirken. Die gleichsam freie Verteilung der Blasluftaustrittsöffnungen und der Polymeraustrittsöffnungen an dem Düsenkopf lässt eine für die jeweilige Anwendung maßgeschneiderte Anordnung der Düsenöffnungen bzw. der Polymeraustrittsöffnungen und der Blasluftaustrittsöffnungen zu. Über das Verhältnis von Polymeraustrittsöffnungen zu Blasluftaustrittsöffnungen lässt sich der resultierende Filament-Luft-Strom ebenfalls funktionssicher beeinflussen. Mit dem erfindungsgemäßen Düsenkopf ist es möglich, eine Vorrichtung zur Herstellung von Meltblown-Vliesstoffen bereitzustellen, bei der Störeinflüsse für den Filament-Luft-Strom auf dem Strömungsweg zwischen dem Düsenkopf und einem Ablageband, beispielsweise Verwirbelungen in den Randbereichen des Filament-Luft-Stromes, vermieden werden können. Dies ist insbesondere bei der Zusammenführung von mehreren Filament-Luft-Strömen oder der Zusammenführung von einem oder mehreren Filament-Luft-Strömen mit Kurzfasern, insbesondere Pulp-Kurzfasern, vorteilhaft. Es ist weiterhin zu betonen, dass die erfindungsgemäßen Maßnahmen wenig aufwendig und insbesondere wenig kostenaufwendig sind, sodass sich der erfindungsgemäße Düsenkopf durch eine hohe Wirtschaftlichkeit auszeichnet. Schließlich ist anzumerken, dass der erfindungsgemäße Düsenkopf sehr variabel ist, da es der Düsenkopf erlaubt, mit wenig aufwendigen Maßnahmen eine Polymeraustrittsöffnung in eine Blasluftaustrittsöffnung umzugestalten und umgekehrt.

Nachfolgend wird die Erfindung anhand einer lediglich ein Ausführungsbeispiel darstellenden Zeichnung näher erläutert. Es zeigen in schematischer Darstellung:
- Fig. 1: eine Unteransicht eines erfindungsgemäßen Düsenkopfes in einer ersten Ausführungsform,
- Fig. 2: eine Unteransicht eines erfindungsgemäßen Düsenkopfes in einer zweiten Ausführungsform,
- Fig. 3: eine Unteransicht eines erfindungsgemäßen Düsenkopfes in einer dritten Ausführungsform,
- Fig. 4: einen Querschnitt durch einen erfindungsgemäßen Düsenkopf,
- Fig. 5: einen Vertikalschnitt durch eine erfindungsgemäße Vorrichtung zur Herstellung von Meltblown-Vliesstoffen.

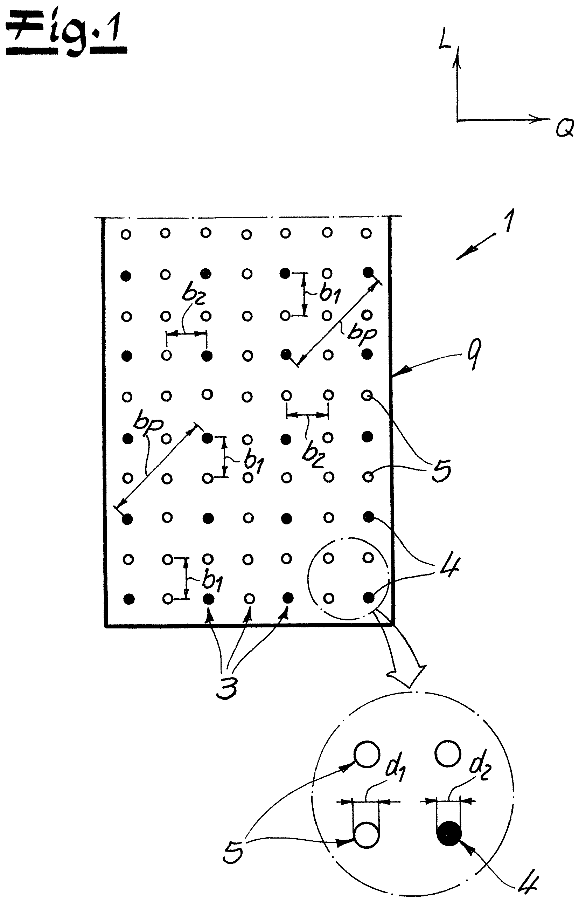

Die Figuren 1 bis 3 zeigen bevorzugte Ausführungsformen erfindungsgemäßer Düsenköpfe 1 zur Erzeugung von Filamenten 2, insbesondere aus einer Polymerschmelze aus thermoplastischem Kunststoff. Der Düsenkopf 1 ist als Meltblown-Blaskopf ausgebildet und weist eine Vielzahl von Düsenöffnungen auf, die in mehreren Längsreihen 3 angeordnet sind. Ein Teil der Düsenöffnungen ist als Polymeraustrittsöffnungen 4 ausgebildet. Diese Polymeraustrittsöffnungen 4 sind in den Figuren 1 bis 3 als ausgefüllte Kreise dargestellt. Der andere Teil der Düsenöffnungen ist als Blasluftaustrittsöffnungen 5 ausgebildet. Diese Blasluftaustrittsöffnungen 5 sind in den Figuren 1 bis 3 als unausgefüllte Kreise dargestellt.

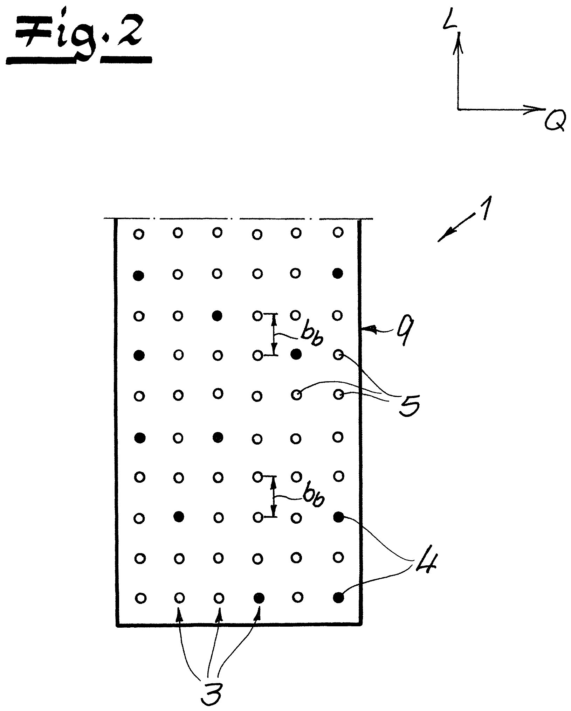

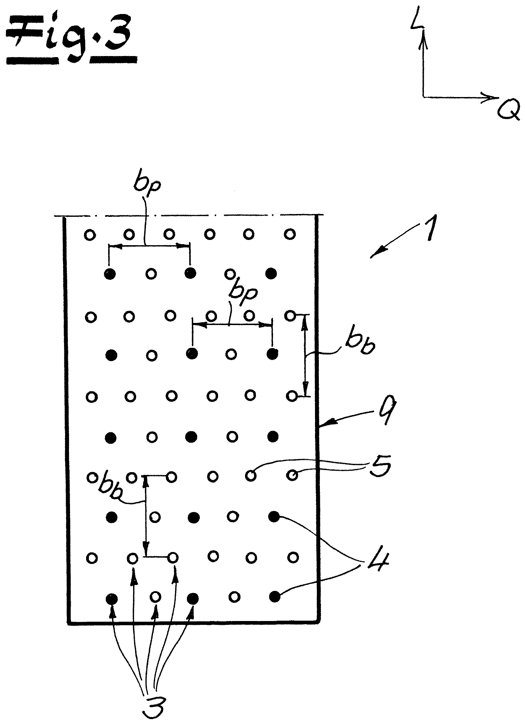

In den bevorzugten Ausführungsformen des Düsenkopfes 1 gemäß den Figuren 1 und 3 sind die Polymeraustrittsöffnungen 4 und die Blasluftaustrittsöffnungen 5 beabstandet zueinander in einem regelmäßigen Muster angeordnet bzw. verteilt. In der bevorzugten Ausführungsform des Düsenkopfes 1 gemäß Fig. 2 sind die Polymeraustrittsöffnungen 4 und die Blasluftaustrittsöffnungen 5 beabstandet zueinander unregelmäßig angeordnet bzw. verteilt. Die Düsenöffnungen des Düsenkopfes 1 sind im Rahmen der Erfindung und im Ausführungsbeispiel in bzw. an einer Düsenplatte 9 angeordnet bzw. verteilt. Bevorzugt und im Ausführungsbeispiel gemäß den Figuren weist der Düsenkopf 1 lediglich Polymeraustrittsöffnungen 4 und Blasluftaustrittsöffnungen 5 als Düsenöffnungen auf.

In der bevorzugten Ausführungsform des Düsenkopfes 1 gemäß der Fig. 1 sind die Düsenöffnungen bzw. die Polymeraustrittsöffnungen 4 und die Blasluftaustrittsöffnungen 5 in sieben Längsreihen 3 an dem Düsenkopf 1 bzw. der Düsenplatte 9 angeordnet. In dem Ausführungsbeispiel gemäß der Fig. 2 sind die Polymeraustrittsöffnungen 4 und die Blasluftaustrittsöffnungen 5 in sechs Längsreihen 3 an dem Düsenkopf 1 bzw. der Düsenplatte 9 angeordnet. In der bevorzugten Ausführungsform des Düsenkopfes 1 gemäß der Fig. 3 sind die Polymeraustrittsöffnungen 4 und die Blasluftaustrittsöffnungen 5 in elf Längsreihen 3 an dem Düsenkopf 1 bzw. der Düsenplatte 9 angeordnet bzw. verteilt.

Mit dem Begriff Längsreihe 3 ist im Rahmen der Erfindung eine Reihe von Düsenöffnungen gemeint, die sich in Längsrichtung L des Düsenkopfes 1 erstreckt und insoweit eine größere Erstreckung und/oder eine größere Anzahl von Düsenöffnungen aufweist als in Querrichtung Q des Düsenkopfes 1 angeordnete Querreihen des Düsenkopfes 1, die aus mehreren nebeneinander angeordneten Längsreihen 3 resultieren. Die Querrichtung Q des Düsenkopfes 1 erstreckt sich somit zweckmäßigerweise und im Ausführungsbeispiel quer, insbesondere senkrecht bzw. im Wesentlichen senkrecht zur Längsrichtung L des Düsenkopfes 1. Mit dem erfindungsgemäßen Düsenkopf 1 lassen sich insbesondere Endlosfilamente erzeugen. Die erzeugten Filamente 2 bzw. Endlosfilamente werden bevorzugt aus einer Polymerschmelze aus thermoplastischem Kunststoff erzeugt, wobei der thermoplastische Kunststoff besonders bevorzugt Polypropylen ist.

Zweckmäßigerweise und im Ausführungsbeispiel gemäß den Figuren sind die Polymeraustrittsöffnungen 4 derart ausgebildet, dass daraus lediglich die Polymerschmelze austritt. Besonders bevorzugt und im Ausführungsbeispiel sind die Polymeraustrittsöffnungen 4 derart ausgebildet, dass die Polymerschmelze daraus ohne einen koaxial zu der jeweiligen Polymeraustrittsöffnung 4 austretenden Blasluftstrom austritt. Darüber hinaus ist den jeweiligen Polymeraustrittsöffnungen 4 vorzugsweise und im Ausführungsbeispiel nicht lediglich eine einzige Blasluftaustrittsöffnung 5 bzw. nicht lediglich ein einziger Blasluftstrom zugeordnet. Im Rahmen der Erfindung und im Ausführungsbeispiel sind die Blasluftaustrittsöffnungen 5 zudem derart ausgebildet, dass daraus lediglich die Blasluft austritt.

Gemäß bevorzugter Ausführungsform der Erfindung und im Ausführungsbeispiel gemäß den Figuren 1 und 3 sind zumindest 80 % der Blasluftaustrittsöffnungen 5 vorzugsweise allen Blasluftaustrittsöffnungen 5 jeweils zumindest zwei Polymeraustrittsöffnungen 4 zugeordnet. Mit der Zuordnung einer Polymeraustrittsöffnung 4 zu einer Blasluftaustrittsöffnung 5 ist im Rahmen der Erfindung insbesondere die direkt benachbarte Anordnung einer Polymeraustrittsöffnung 4 zu einer Blasluftaustrittsöffnung 5 ohne dazwischenliegende andere Düsenöffnungen gemeint. Eine direkte Nachbarschaft zweier Düsenöffnungen kann im Rahmen der Erfindung in Längsrichtung L des Düsenkopfes 1, in Querrichtung Q des Düsenkopfes 1 oder in einer Diagonal- bzw. Schrägrichtung des Düsenkopfes 1 vorliegen.

Es liegt weiterhin im Rahmen der Erfindung, dass zumindest 85 % der Polymeraustrittsöffnungen 4 jeweils zumindest zwei Blasluftaustrittsöffnungen 5 zugeordnet sind. Empfohlenermaßen und im Ausführungsbeispiel gemäß den Figuren 1 bis 3 sind allen Polymeraustrittsöffnungen 4 jeweils zumindest zwei Blasluftaustrittsöffnungen 5 zugeordnet.

Gemäß bevorzugter Ausführungsform der Erfindung und im Ausführungsbeispiel gemäß den Figuren liegt der Anteil der Polymeraustrittsöffnungen 4 an der Gesamtzahl der Düsenöffnungen zwischen 10 % und 50 %, vorzugsweise zwischen 12 % und 45 %. In den bevorzugten Ausführungsformen des Düsenkopfes 1 gemäß den Figuren 1 und 3 mag der Anteil der Polymeraustrittsöffnungen 4 an der Gesamtzahl der Düsenöffnungen etwa 30 % betragen. In der bevorzugten Ausführungsform des Düsenkopfes 1 gemäß der Fig. 2 mag der Anteil der Polymeraustrittsöffnungen 4 an der Gesamtzahl der Düsenöffnungen etwa 20 % betragen.

Es ist im Rahmen der Erfindung besonders bevorzugt, dass die Abstände direkt benachbarter Düsenöffnungen des Düsenkopfes 1 in zumindest einer Düsenkopfrichtung auf dem gesamten Düsenkopf 1 gleich bzw. im Wesentlichen gleich sind. Mit dem Abstand zweier Düsenöffnungen ist im Rahmen der Erfindung und im Ausführungsbeispiel insbesondere der Mittelpunktsabstand der Düsenöffnungen gemeint. Die Düsenöffnungen können in Längsrichtung L des Düsenkopfes 1, in Querrichtung Q des Düsenkopfes 1 oder in einer Schrägrichtung bzw. Diagonalrichtung des Düsenkopfes 1 direkt benachbart sein. Mit der direkten Nachbarschaft zweier Düsenöffnungen ist dabei insbesondere gemeint, dass zwischen den beiden Düsenöffnungen keine weitere Düsenöffnung angeordnet ist.

In der bevorzugten Ausführungsform des Düsenkopfes 1 gemäß der Fig. 1 sind etwa alle Abstände b₁ in Längsrichtung L des Düsenkopfes 1 direkt benachbarter Düsenöffnungen des Düsenkopfes 1 auf dem gesamten Düsenkopf 1 gleich bzw. im Wesentlichen gleich. Weiterhin sind bevorzugt und in der Ausführungsform des Düsenkopfes 1 gemäß der Fig. 1 alle Abstände b₂ in Querrichtung Q des Düsenkopfes 1 direkt benachbarter Düsenöffnungen des Düsenkopfes 1 auf dem gesamten Düsenkopf 1 gleich bzw. im Wesentlichen gleich. Empfohlenermaßen und in der bevorzugten Ausführungsform gemäß der Fig. 1 sind zudem alle Abstände b₁ und b₂ gleich bzw. im Wesentlichen gleich.

Es ist weiterhin bevorzugt, dass die Abstände b_{b} direkt benachbarter Blasluftaustrittsöffnungen 5 in zumindest einer Düsenkopfrichtung auf dem gesamten Düsenkopf 1 gleich bzw. im Wesentlichen gleich sind. In den Figuren 2 und 3 ist beispielsweise zu erkennen, dass alle Abstände b_{b} in Längsrichtung L des Düsenkopfes 1 direkt benachbarter Blasluftaustrittsöffnungen 5 auf dem gesamten Düsenkopf 1 gleich bzw. im Wesentlichen gleich sind.

Empfohlenermaßen und in der bevorzugten Ausführungsform gemäß den Figuren 1 und 3 sind außerdem die Abstände bₚ benachbarter Polymeraustrittsöffnungen 4 in zumindest einer Düsenkopfrichtung auf dem gesamten Düsenkopf 1 gleich bzw. im Wesentlichen gleich. Mit benachbarten Polymeraustrittsöffnungen 4 sind zwei Polymeraustrittsöffnungen 4 gemeint, die nicht direkt benachbart sind, zwischen denen aber keine weitere Polymeraustrittsöffnung 4 angeordnet ist. Im Ausführungsbeispiel gemäß der Fig. 3 sind etwa alle Abstände bₚ in Querrichtung Q des Düsenkopfes 1 benachbarter Polymeraustrittsöffnungen 4 auf dem gesamten Düsenkopf 1 gleich bzw. im Wesentlichen gleich. Im Ausführungsbeispiel gemäß der Fig. 1 sind etwa alle Abstände bₚ in einer Diagonal- bzw. Schrägrichtung des Düsenkopfes benachbarter Polymeraustrittsöffnungen 4 auf dem gesamten Düsenkopf 1 gleich bzw. im Wesentlichen gleich.

Gemäß einer bevorzugten Ausführungsform des erfindungsgemäßen Düsenkopfes 1 und im Ausführungsbeispiel gemäß den Figuren 1 und 3 ist zumindest eine Längsreihe 3 aus Düsenöffnungen vorgesehen, die ausschließlich Blasluftaustrittsöffnungen 5 aufweist. Im Ausführungsbeispiel gemäß der Fig. 1 sind drei Längsreihen 3 und im Ausführungsbeispiel gemäß der Fig. 3 sechs Längsreihen 3 vorhanden, die ausschließlich Blasluftaustrittsöffnungen 5 aufweisen. Zweckmäßigerweise folgt in Querrichtung des Düsenkopfes 1 auf eine Längsreihe 3, die ausschließlich Blasluftaustrittsöffnungen 5 aufweist, eine Längsreihe 3, in der Polymeraustrittsöffnungen 4 vorhanden sind (Figuren 1 und 3). Bevorzugt und im in der Ausführungsform gemäß den Figuren 1 und 3 sind die ausschließlich Blasluftaustrittsöffnungen 5 aufweisenden Längsreihen 3 und die Längsreihen 3 mit Polymeraustrittsöffnungen 4 in Querrichtung Q des Düsenkopfes 1 über den gesamten Düsenkopf 1 alternierend angeordnet.

Gemäß einer bevorzugten Ausführungsform der Erfindung sind in der zumindest einen Längsreihe 3, die Polymeraustrittsöffnungen 4 aufweist, vorzugsweise und in der Ausführungsform gemäß der Fig. 1 in allen Längsreihen 3, die Polymeraustrittsöffnungen 4 aufweisen, sowohl Polymeraustrittsöffnungen 4 als auch Blasluftaustrittsöffnungen 5 angeordnet. Zweckmäßigerweise und in der Ausführungsform gemäß der Fig. 1 sind dabei die Polymeraustrittsöffnungen 4 und die Blasluftaustrittsöffnungen 5 alternierend in den Längsreihen 3, die Polymeraustrittsöffnungen 4 und Blasluftaustrittsöffnungen 5 aufweisen, angeordnet.

Gemäß einer alternativen Ausführungsform der Erfindung sind in der zumindest einen Längsreihe 3, die Polymeraustrittsöffnungen 4 aufweist, vorzugsweise in allen Längsreihen 3, die Polymeraustrittsöffnungen 4 aufweisen, ausschließlich Polymeraustrittsöffnungen 4 angeordnet. Dies ist in der bevorzugten Ausführungsform des Düsenkopfes 1 gemäß der Fig. 3 der Fall. In dem bevorzugten Ausführungsbeispiel gemäß der Fig. 3 sind die Polymeraustrittsöffnungen 4 der ausschließlich Polymeraustrittsöffnungen 4 aufweisenden Längsreihen 3 zudem in Längsrichtung L des Düsenkopfes 1 versetzt zu den Blasluftaustrittsöffnungen 5 der ausschließlich Blasluftaustrittsöffnungen 5 aufweisenden Längsreihen 3 angeordnet. Im Rahmen der Ausführungsform gemäß der Fig. 3 sind dann insbesondere in Längsrichtung L des Düsenkopfes 1 direkt benachbarte Polymeraustrittsöffnungen 4 vorhanden.

Eine weitere bevorzugte Ausführungsform der Erfindung ist dadurch gekennzeichnet, dass alle Längsreihen 3 aus Düsenöffnungen sowohl Polymeraustrittsöffnungen 4 als auch Blasluftaustrittsöffnungen 5 aufweisen. Dies ist etwa in der bevorzugten Ausführungsform des Düsenkopfes 1 gemäß der Fig. 2 der Fall. In der bevorzugten Ausführungsform gemäß der Fig. 2 sind außerdem in allen Längsreihen 3 die Polymeraustrittsöffnungen 4 und die Blasluftaustrittsöffnungen 5 unregelmäßig angeordnet.

Zweckmäßigerweise und im Ausführungsbeispiel weisen die Blasluftaustrittsöffnungen 5 einen Durchmesser d₁ zwischen 0,1 und 1,5 mm auf. Im Ausführungsbeispiel gemäß den Figuren mögen die Blasluftaustrittsöffnungen 5 einen Durchmesser d₁ von etwa 1 mm aufweisen (Fig. 1). Gemäß bevorzugter Ausführungsform und im Ausführungsbeispiel weicht der Durchmesser d₂ der Polymeraustrittsöffnungen 4 um maximal 10 % von dem Durchmesser d₁ der Blasluftaustrittsöffnungen 5 ab. Im Ausführungsbeispiel (Fig. 1) ist der Durchmesser d₂ der Polymeraustrittsöffnungen 4 um etwa 10 % kleiner als der Durchmesser d₁ der Blasluftaustrittsöffnungen 5.

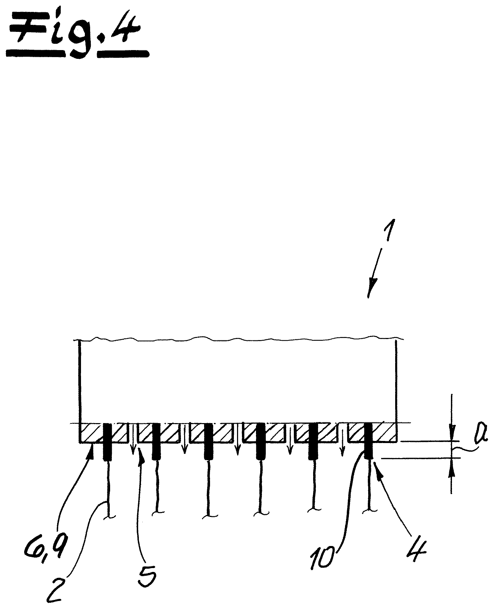

Eine besonders bevorzugte Ausführungsform des erfindungsgemäßen Düsenkopfes 1 ist dadurch gekennzeichnet, dass der Düsenkopf 1 Öffnungsfortsätze 10 aufweist, die über eine Düsenkopfoberfläche 6 des Düsenkopfes 1 hinausragen und an deren der Düsenkopfoberfläche 6 abgewandten Ende vorzugsweise und im Ausführungsbeispiel die Polymeraustrittsöffnungen 4 angeordnet sind (Fig. 4). Dies meint im Rahmen der Erfindung insbesondere, dass sich die Öffnungsfortsätze 10 über die Düsenkopfoberfläche 6 hinaus erstrecken und dass die Polymerschmelze an dem der Düsenkopfoberfläche 6 abgewandten Ende der Öffnungsfortsätze 10 aus den Öffnungsfortsätzen 10 bzw. aus den Polymeraustrittsöffnungen 4 austritt. Die Düsenkopfoberfläche 6 des Düsenkopfes wird zweckmäßigerweise und im Ausführungsbeispiel von der Düsenplatte 9 des Düsenkopfes 1 gebildet. Weiter bevorzugt und im Ausführungsbeispiel sind die Blasluftaustrittsöffnungen 5 in der Düsenplatte 9 bzw. in der Düsenkopfoberfläche 6 angeordnet. Es hat sich bewährt, dass der Abstand a zwischen dem der Düsenkopfoberfläche 6 abgewandten Ende der Öffnungsfortsätze 10 und der Düsenkopfoberfläche 6 zwischen 0,05·d₂ und 10·d₂ entspricht, vorzugsweise zwischen 0,1·d₂ und 5·d₂ entspricht, wobei d₂ der Durchmesser der Polymeraustrittsöffnungen 4 ist. Im bevorzugten Ausführungsbeispiel gemäß der Fig. 4 mag der Abstand a zwischen dem Ende der Öffnungsfortsätze 10 und der Düsenkopfoberfläche 6 etwa 2·d₂ entsprechen. Der Außendurchmesser der Öffnungsfortsätze 10 an dem der Düsenkopfoberfläche 6 des Düsenkopfes 1 abgewandten Ende weicht vorzugsweise um maximal 15 %, bevorzugt um maximal 10 % und besonders bevorzugt um maximal 5 % von dem Durchmesser d₁ der Blasluftaustrittsöffnungen 5 ab. Zweckmäßigerweise entspricht der Außendurchmesser der Öffnungsfortsätze 10 an dem der Düsenkopfoberfläche 6 des Düsenkopfes 1 abgewandten Ende dem Durchmesser d₁ der Blasluftaustrittsöffnungen 5 bzw. entspricht im Wesentlichen diesem Durchmesser.

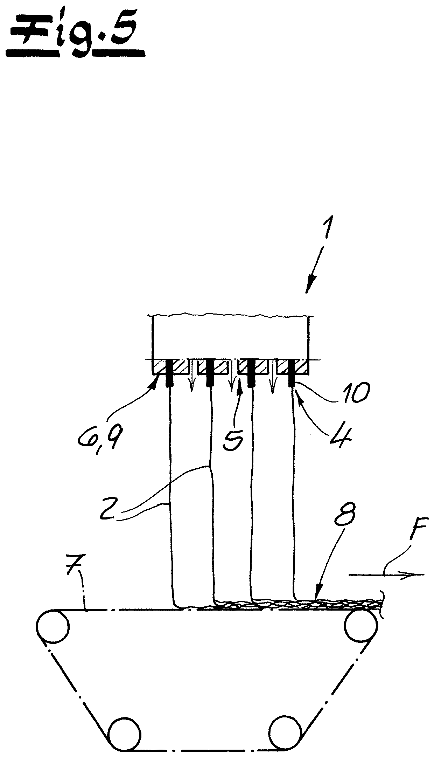

Die Fig. 5 zeigt eine erfindungsgemäße Vorrichtung zur Herstellung von Meltblown-Vliesstoffen 8 mit zumindest einem Filamente 2 abgebenden Düsenkopf 1. Unterhalb des Düsenkopfes 1 ist ein kontinuierlich bewegbares Ablageband 7, bevorzugt und im Ausführungsbeispiel ein endlos umlaufendes Ablagesiebband, angeordnet, auf dem die Filamente 2 zum Meltblown-Vliesstoff 8 ablegbar sind. Der Düsenkopf 1 ist als Meltblown-Blaskopf ausgebildet und weist eine Vielzahl von in mehreren sich quer, insbesondere senkrecht bzw. im Wesentlichen senkrecht zur Förderrichtung F des Ablagesiebbandes 7 erstreckenden Längsreihen 3 angeordnete Düsenöffnungen auf. Bei dem Düsenkopf 1 handelt es sich zweckmäßigerweise und im Ausführungsbeispiel gemäß der Fig. 5 um einen vorstehend beschriebenen, erfindungsgemäßen Düsenkopf 1.

## Patentansprüche

1. Düsenkopf zur Erzeugung von Filamenten (2), insbesondere aus einer Polymerschmelze aus thermoplastischem Kunststoff, wobei der Düsenkopf (1) als Meltblown-Blaskopf ausgebildet ist und eine Vielzahl von in zumindest zwei, bevorzugt in zumindest drei, besonders bevorzugt in zumindest vier Reihen bzw. Längsreihen (3) angeordneten Düsenöffnungen aufweist, wobei ein Teil der Düsenöffnungen als Polymeraustrittsöffnungen (4) und ein Teil bzw. der andere Teil der Düsenöffnungen als Blasluftaustrittsöffnungen (5) ausgebildet ist, wobei die Polymeraustrittsöffnungen (4) und die Blasluftaustrittsöffnungen (5) beabstandet zueinander in einem regelmäßigen Muster und/oder unregelmäßig angeordnet sind
und wobei der Anteil der Polymeraustrittsöffnungen (4) an der Gesamtzahl der Düsenöffnungen zwischen 12 % und 45 % liegt.

2. Düsenkopf nach Anspruch 1, wobei die Polymeraustrittsöffnungen (4) derart ausgebildet sind, dass daraus lediglich die Polymerschmelze austritt und dass die Polymerschmelze insbesondere ohne einen koaxial zu der jeweiligen Polymeraustrittsöffnung (4) austretenden Blasluftstrom aus der Polymeraustrittsöffnung (4) austritt.

3. Düsenkopf nach einem der Ansprüche 1 oder 2, wobei die Blasluftaustrittsöffnungen (5) derart ausgebildet sind, das daraus lediglich die Blasluft austritt.

4. Düsenkopf nach einem der Ansprüche 1 bis 3, wobei zumindest 70 %, vorzugsweise zumindest 80 %, bevorzugt zumindest 90 %, besonders bevorzugt zumindest 95 % der Blasluftaustrittsöffnungen (5), ganz besonders bevorzugt allen Blasluftaustrittsöffnungen (5) jeweils zumindest zwei Polymeraustrittsöffnungen (4) zugeordnet sind.

5. Düsenkopf nach einem der Ansprüche 1 bis 4, wobei die Abstände direkt benachbarter Düsenöffnungen des Düsenkopfes (1) in zumindest einer Düsenkopfrichtung auf dem gesamten Düsenkopf (1) gleich bzw. im Wesentlichen gleich sind und wobei insbesondere die Abstände direkt benachbarter Blasluftaustrittsöffnungen (5) in zumindest einer Düsenkopfrichtung und/oder die Abstände benachbarter Polymeraustrittsöffnungen (4) in zumindest einer Düsenkopfrichtung auf dem gesamten Düsenkopf (1) gleich bzw. im Wesentlichen gleich sind.

6. Düsenkopf nach einem der Ansprüche 1 bis 5, wobei der Anteil der Polymeraustrittsöffnungen (4) an der Gesamtzahl der Düsenöffnungen zwischen 15 % und 40 % liegt.

7. Düsenkopf nach einem der Ansprüche 1 bis 6, wobei zumindest eine Reihe bzw. Längsreihe (3) aus Düsenöffnungen vorgesehen ist, die ausschließlich Blasluftaustrittsöffnungen (5) aufweist, wobei vorzugsweise auf eine Reihe bzw. Längsreihe (3), die ausschließlich Blasluftaustrittsöffnungen (5) aufweist, eine Reihe bzw. Längsreihe (3) folgt, in der Polymeraustrittsöffnungen (4) vorhanden sind, und wobei die ausschließlich Blasluftaustrittsöffnungen (5) aufweisenden Reihen bzw. Längsreihen (3) und die Reihen bzw. Längsreihen (3) mit Polymeraustrittsöffnungen (4) besonders bevorzugt in Querrichtung des Düsenkopfes über den gesamten Düsenkopf (1) alternierend angeordnet sind.

8. Düsenkopf nach Anspruch 7, wobei in der zumindest einen Reihe bzw. Längsreihe (3), die Polymeraustrittsöffnungen (4) aufweist, vorzugsweise in allen Reihen bzw. Längsreihen (3), die Polymeraustrittsöffnungen (4) aufweisen, sowohl Polymeraustrittsöffnungen (4) als auch Blasluftaustrittsöffnungen (5) angeordnet sind und wobei die Polymeraustrittsöffnungen (4) und die Blasluftaustrittsöffnungen (5) bevorzugt alternierend und/oder unregelmäßig in der jeweiligen Reihe bzw. Längsreihe (3) angeordnet sind.

9. Düsenkopf nach einem der Ansprüche 1 bis 8, wobei die Blasluftaustrittsöffnungen (5) einen Durchmesser zwischen 0,05 und 2 mm, vorzugsweise zwischen 0,1 und 1,5 mm, bevorzugt zwischen 0,1 und 1 mm aufweisen.

10. Düsenkopf nach einem der Ansprüche 1 bis 9, wobei der Durchmesser der Polymeraustrittsöffnungen (4) um maximal 15%, vorzugsweise um maximal 10 % von dem Durchmesser der Blasluftaustrittsöffnungen (5) abweicht.

11. Düsenkopf nach einem der Ansprüche 1 bis 10, wobei der Düsenkopf (1) Öffnungsfortsätze (10) aufweist, die über eine Düsenkopfoberfläche (6) des Düsenkopfes (1) hinausragen und an deren der Düsenkopfoberfläche (6) abgewandten Ende vorzugsweise die Polymeraustrittsöffnungen (4) angeordnet sind, wobei bevorzugt der Abstand zwischen dem der Düsenkopfoberfläche (6) abgewandten Ende der Öffnungsfortsätze (10) und der Düsenkopfoberfläche (6) zwischen 0,05 und 10 mal, bevorzugt zwischen 0,1 und 5 mal dem Durchmesser der Polymeraustrittsöffnungen (4) entspricht.

12. Vorrichtung zur Herstellung von Meltblown-Vliesstoffen, insbesondere aus einer Polymerschmelze aus thermoplastischem Kunststoff, mit zumindest einem Filamente (2) abgebenden Düsenkopf (1) gemäß einem der Ansprüche 1 bis 11, wobei unterhalb des Düsenkopfes (1) ein kontinuierlich bewegbares Ablageband (7) angeordnet ist, auf dem die Filamente (2) zum Meltblown-Vliesstoff (8) ablegbar sind, wobei der Düsenkopf (1) als Meltblown-Blaskopf ausgebildet ist und eine Vielzahl von - vorzugsweise in zumindest zwei, bevorzugt in zumindest drei, besonders bevorzugt in zumindest vier sich quer, insbesondere senkrecht bzw. im Wesentlichen senkrecht zur Förderrichtung des Ablagebandes (7) erstreckenden Reihen bzw. Längsreihen (3) angeordnete - Düsenöffnungen aufweist, wobei ein Teil der Düsenöffnungen als Polymeraustrittsöffnungen (4) und ein Teil bzw. der andere Teil der Düsenöffnungen als Blasluftaustrittsöffnungen (5) ausgebildet ist, wobei die Polymeraustrittsöffnungen (4) und die Blasluftaustrittsöffnungen (5) beabstandet zueinander in einem regelmäßigen Muster und/oder unregelmäßig angeordnet sind.

13. Verfahren zur Herstellung eines Meltblown-Vliesstoffes mit einer Vorrichtung gemäß Anspruch 12, wobei mit dem zumindest einen Düsenkopf (1) Filamente (2), insbesondere aus einer Polymerschmelze aus thermoplastischem Kunststoff, erzeugt werden und wobei die Filamente (2) auf einem kontinuierlich bewegbaren Ablageband (7) zum Meltblown-Vliesstoff (8) abgelegt werden.

14. Verfahren nach Anspruch 13, wobei den Filamenten (2) auf dem Strömungsweg zwischen dem zumindest einen Düsenkopf (1) und dem Ablageband (7) Kurzfasern, insbesondere Pulp-Kurzfasern, zugefügt werden, sodass ein Filament-Kurzfaser-Gemisch auf dem Ablagesiebband (7) als Meltblown-Vliesstoff (8) abgelegt wird.

15. Verwendung eines Düsenkopfes gemäß einem der Ansprüche 1 bis 12 in einem Verfahren zur Herstellung eines Vliesstoffes bzw. Meltblown-Vliesstoffes (8) aus Filamenten (2) bzw. Meltblown-Filamenten und Pulp-Kurzfasern.

## Claims

1. Nozzle head for producing filaments (2), in particular from a polymer melt of thermoplastic material, wherein the nozzle head (1) is configured as a meltblown blow head and comprises a plurality of nozzle openings arranged in at least two, more preferably in at least three, particularly preferably in at least four rows or longitudinal rows (3) wherein a part of the nozzle openings is configured as polymer outlet openings (4) and a part or the other part of the nozzle openings is configured as blown air outlet openings (5), wherein the polymer outlet openings (4) and the blown air outlet openings (5) are arranged spaced apart from one another in a regular pattern and/or irregularly
and wherein the fraction of the polymer outlet openings (4) among the total number of nozzle openings is between 12% and 45%.

2. Nozzle head according to Claim 1, wherein the polymer outlet openings (4) are configured in such a manner that only the polymer melt exits and that the polymer melt exits from the polymer outlet opening (4) in particular without a blown air stream exiting coaxially to the respective polymer outlet opening (4).

3. Nozzle head according to one of Claims 1 or 2, wherein the blown air outlet openings (5) are configured in such a manner that only the blown air exits therefrom.

4. Nozzle head according to one of Claims 1 to 3, wherein at least 70%, preferably at least 80%, more preferably at least 90%, particularly preferably at least 95% of the blown air outlet openings (5), quite particularly preferably all the blown air outlet openings (5) are each assigned at least two polymer outlet openings (4).

5. Nozzle head according to one of Claims 1 to 4, wherein the distances of directly adjacent nozzle openings of the nozzle head (1) are the same or substantially the same in at least one nozzle head direction on the entire nozzle head (1) and wherein in particular the distances of directly adjacent blown air outlet openings (5) in at least one nozzle head direction and/or the distances of adjacent polymer outlet openings (4) in at least one nozzle head direction are the same or substantially the same on the entire nozzle head (1).

6. Nozzle head according to one of Claims 1 to 5, wherein the fraction of the polymer outlet openings (4) among the total number of nozzle openings is between 15% and 40%.

7. Nozzle head according to one of Claims 1 to 6, wherein at least one row or longitudinal row (3) of nozzle openings is provided, which comprises exclusively blown air outlet openings (5), wherein preferably one row or longitudinal row (3) which exclusively comprises blown air outlet openings (5) is followed by one row or longitudinal row (3) in which polymer outlet openings (4) are provided and wherein the rows or longitudinal rows (3) exclusively comprising blown air outlet openings (5) and the rows or longitudinal rows (3) with polymer outlet openings (4) are particularly preferably arranged alternately in the transverse direction of the nozzle head over the entire nozzle head (1).

8. Nozzle head according to Claim 7, wherein in the at least one row or longitudinal row (3) having polymer outlet openings (4), preferably in all the rows or longitudinal rows (3) having polymer outlet openings (4), both polymer outlet openings (4) and blown air outlet openings (5) are arranged and wherein the polymer outlet openings (4) and the blown air outlet openings (5) are preferably arranged alternately and/or irregularly in the respective row or longitudinal row (3).

9. Nozzle head according to one of Claims 1 to 8, wherein the blown air outlet openings (5) have a diameter between 0.05 and 2 mm, preferably between 0.1 and 1.5 mm, more preferably between 0.1 and 1 mm.

10. Nozzle head according to one of Claims 1 to 9, wherein the diameter of the polymer outlet openings (4) deviates by a maximum of 15%, preferably by a maximum of 10% from the diameter of the blown air outlet openings (5).

11. Nozzle head according to one of Claims 1 to 10, wherein the nozzle head (1) has opening extensions (10) which project beyond a nozzle head surface (6) of the nozzle head (1) and the polymer outlet openings (4) are preferably arranged at the end thereof facing away from the nozzle head surface (6), wherein preferably the distance between the end of the opening extensions (10) facing away from the nozzle head surface (6) and the nozzle head surface (6) is between 0.05 and 10 times, preferably between 0.1 and 5 times the diameter of the polymer outlet openings (4).

12. Apparatus for producing meltblown nonwoven fabrics, in particular from a polymer melt of thermoplastic material, comprising at least one nozzle head (1) which delivers filaments (2) according to one of Claims 1 to 11, wherein a continuously movable depositing belt (7) is arranged below the nozzle head (1), on which the filaments (2) can be deposited to form the meltblown nonwoven fabric (8), wherein the nozzle head (1) is configured as a meltblown blow head and comprises a plurality of nozzle openings - preferably arranged in at least two, more preferably in at least three, particularly preferably in at least four rows or longitudinal rows (3) extending transversely, in particular perpendicular to or substantially perpendicular to the conveying direction of the depositing belt (7) - wherein a part of the nozzle openings is configured as polymer outlet openings (4) and a part or the other part of the nozzle openings is configured as blown air outlet openings (5), wherein the polymer outlet openings (4) and the blown air outlet openings (5) are arranged spaced apart from one another in a regular pattern and/or irregularly.

13. Method for producing a meltblown nonwoven fabric using an apparatus according to Claim 12, wherein filaments (2), in particular of a polymer melt of thermoplastic material are produced using the at least one nozzle head (1) and wherein the filaments (2) are deposited on a continuously movable depositing belt (7) to form the meltblown nonwoven fabric (8).

14. Method according to Claim 13, wherein short fibres, in particular pulp short fibres, are added to the filaments (2) on the flow path between the at least one nozzle head (1) and the depositing belt (7) so that a filament-short-fibre mixture is deposited on the depositing foraminous belt (7) as meltblown nonwoven fabric (8).

15. Use of a nozzle head according to one of Claims 1 to 12 in a method for producing a nonwoven fabric or meltblown nonwoven fabric (8) of filaments (2) or meltblown filaments and pulp short fibres.

## Revendications

1. Tête de tuyère, destinée à créer des filaments (2), notamment à partir d'une masse fondue de polymère en une matière thermoplastique, la tête de tuyère (1) étant conçue sous la forme d'une tête de soufflage en fusion et comportant une pluralité d'orifices de tuyère placés en au moins deux, de préférence en au moins trois, de manière particulièrement préférentielle, en au moins quatre rangées ou rangées longitudinales (3), une partie des orifices de tuyère étant conçue sous la forme d'orifices de sortie (4) de polymère et une partie ou l'autre partie des orifices de tuyère étant conçue sous la forme d' orifices de sortie (5) d'air de soufflage, les orifices de sortie (4) de polymère et les orifices de sortie (5) d'air de soufflage étant placés avec un écart mutuel en un motif régulier et / ou de manière irrégulière
et la proportion des orifices de sortie (4) de polymère par rapport au nombre total des orifices de tuyère se situant entre 12 % et 45 %.

2. Tête de tuyère selon la revendication 1, les orifices de sortie (4) de polymère étant conçus de sorte que s'en échappe exclusivement la masse fondue de polymère et que la masse fondue de polymère s'échappe notamment de l'orifice de sortie (4) de polymère sans un flux d'air de soufflage s'échappant de manière coaxiale à l'orifice de sortie (4) de polymère concerné.

3. Tête de tuyère selon l'une quelconque des revendications 1 ou 2, les orifices de sortie (5) d'air de soufflage étant conçus de sorte qu'il ne s'en échappe que l'air de soufflage.

4. Tête de tuyère selon l'une quelconque des revendications 1 à 3, à au moins 70 %, de préférence à au moins 80 %, de manière préférentielle, à au moins 90 %, de manière particulièrement préférentielle, à au moins 95 % des orifices de sortie (5) d'air de soufflage, de manière tout particulièrement préférentielle, à tous les orifices de sortie (5) d'air de soufflage étant associés chaque fois au moins deux orifices de sortie (4) de polymère.

5. Tête de tuyère selon l'une quelconque des revendications 1 à 4, dans au moins une direction de la tête de tuyère, les écarts entre des orifices de tuyère directement voisins de la tête de tuyère (1) étant identiques ou sensiblement identiques sur l'ensemble de la tête de tuyère (1) et notamment dans au moins une direction de la tête de tuyère, les écarts entre des orifices de sortie (5) d'air de soufflage directement voisins et / ou dans au moins une direction de la tête de tuyère, les orifices de sortie (4) de polymère étant identiques ou sensiblement identiques sur l'ensemble de la tête de tuyère (1).

6. Tête de tuyère selon l'une quelconque des revendications 1 à 5, la proportion des orifices de sortie (4) de polymère par rapport au nombre total des orifices de tuyère se situant entre 15 % et 40 %.

7. Tête de tuyère selon l'une quelconque des revendications 1 à 6, au moins une rangée ou rangée longitudinale (3) d'orifices de tuyère étant prévue, qui comporte exclusivement des orifices de sortie (5) d'air de soufflage, de préférence à une rangée ou rangée longitudinale (3), qui comporte exclusivement des orifices de sortie (5) d'air de soufflage faisant suite une rangée ou une rangée longitudinale (3) dans laquelle sont présents des orifices de sortie (4) de polymère, et les rangées ou rangées longitudinales (3) comportant exclusivement des orifices de sortie (5) d'air de soufflage et les rangées ou rangées longitudinales (3) pourvues d'orifices de sortie (4) de polymère étant placées de préférence en alternance dans la direction transversale de la tête de tuyère, sur l'ensemble de la tête de tuyère (1).

8. Tête de tuyère selon la revendication 7, dans l'au moins un rangée ou rangée longitudinale (3) qui comporte des orifices de sortie (4) de polymère, de préférence dans toutes les rangées ou rangées longitudinales (3) qui comportent des orifices de sortie (4) de polymère étant placés aussi bien des orifices de sortie (4) de polymère qu'également des orifices de sortie (5) d'air de soufflage et les orifices de sortie (4) de polymère et les orifices de sortie (5) d'air de soufflage étant placés de préférence en alternance et / ou de manière irrégulière dans la rangée ou la rangée longitudinale (3) concernée.

9. Tête de tuyère selon l'une quelconque des revendications 1 à 8, les orifices de sortie (5) d'air de soufflage présentant un diamètre compris entre 0,05 et 2 mm, de préférence entre 0,1 et 1,5 mm, de manière préférentielle, entre 0,1 et 1 mm.

10. Tête de tuyère selon l'une quelconque des revendications 1 à 9, le diamètre des orifices de sortie (4) de polymère divergeant d'un maximum de 15 %, de préférence d'un maximum de 10 % du diamètre des orifices de sortie (5) d'air de soufflage.

11. Tête de tuyère selon l'une quelconque des revendications 1 à 10, la tête de tuyère (1) comportant des prolongements d'orifices (10) qui saillissent au-delà d'une surface (6) de tête de tuyère de la tête de tuyère (1) et sur l'extrémité opposée à la surface (6) de tête de tuyère desquels sont placés les orifices de sortie (4) de polymère, de préférence, l'écart entre l'extrémité des prolongements d'orifices (10) opposés à la surface (6) de tête de tuyère et la surface (6) de tête de tuyère correspondant à entre 0,05 et 10 fois, de préférence à entre 0,1 et 5 fois le diamètre des orifices de sortie (4) de polymère.

12. Dispositif, destiné à produire des non-tissés soufflés à l'état fondu, notamment à partir d'une masse fondue de polymère en matière thermoplastique, pourvu d'au moins une tête de tuyère (1) selon l'une quelconque des revendications 1 à 11 distribuant des filaments (2), en-dessous de la tête de tuyère (1) étant placée une bande de dépose (7) mobile, sur laquelle les filaments (2) peuvent être déposés en un non-tissé (8) soufflé à l'état fondu, la tête de tuyère (1) étant conçue sous la forme d'une tête de soufflage en fusion et comportant une pluralité d'orifices de tuyère - placées de préférence en au moins deux, de manière préférentielle en au moins trois et de manière particulièrement préférentielle, en au moins quatre rangées ou rangées longitudinales (3) s'étendant à la transversale, notamment à la perpendiculaire ou sensiblement à la perpendiculaire de la direction de convoyage de la bande de dépose (7) -, une partie des orifices de tuyère étant conçue sous la forme d'orifices de sortie (4) de polymère et une partie ou l'autre partie des orifices de tuyère étant conçue sous la forme d'orifices de sortie (5) d'air de soufflage, les orifices de sortie (4) de polymère et les orifices de sortie (5) d'air de soufflage étant placés avec un écart mutuel en un motif régulier et / ou de manière irrégulière.

13. Procédé, destiné à produire un non-tissé à l'état fondu à l'aide d'un dispositif selon la revendication 12, avec l'au moins une tête de tuyère (1), des filaments (2), étant créés notamment à partir d'une masse fondue de polymère en une matière thermoplastique et les filaments (2) étant déposés sur une bande de dépose (7) mobile en continu en un non-tissé (8) soufflé à l'état fondu.

14. Procédé selon la revendication 13, aux filaments (2) étant ajoutées sur le trajet d'écoulement entre l'au moins une tête de tuyère (1) et la bande de dépose (7) des fibres courtes, notamment des fibres courtes de pulpe, de sorte qu'un mélange de fibres courtes - de filaments soit déposé sur la bande perforée de dépose (7) en un non-tissé (8) soufflé à l'état fondu.

15. Utilisation d'une tête de tuyère selon l'une quelconque des revendications 1 à 12 dans un procédé, destiné à produire un non-tissé ou un non-tissé (8) soufflé à l'état fondu à partir de filaments (2).
